# EUROPÄISCHE PATENTSCHRIFT

(11) **EP 3 762 267 B1**
(45) Veröffentlichungstag und Bekanntmachung des Hinweises auf die Patenterteilung: **31.05.2023**
(21) Anmeldenummer: 19712697.2
(22) Anmeldetag: 07.03.2019
(51) Int. Cl.: B60T 8/1755, B62D 11/08, B62D 9/00, B62D 5/04

(54) **LENKVERFAHREN FÜR EIN AUTONOM GELENKTES FAHRZEUG**
STEERING METHOD FOR AN AUTONOMOUSLY STEERED VEHICLE
PROCÉDÉ DE DIRECTION POUR UN VÉHICULE À DIRECTION AUTONOME

(30) Priorität: 09.03.2018 DE 102018105508; 22.03.2018 DE 102018106889
(43) Veröffentlichungstag der Anmeldung: 13.01.2021
(73) Patentinhaber: KNORR-BREMSE Systeme für Nutzfahrzeuge GmbH, 80809 München (DE)
(72) Erfinder: HECKER, Falk, 71706 Markgröningen (DE); MÜLLER, Jens-Hauke, 42553 Velbert-Neviges (DE); HEIMBROCK, Peter, 42929 Wermelskirchen (DE); STEINBERGER, Jürgen, 82194 Gröbenzell (DE)
(86) Internationale Anmeldenummer: PCT/EP2019/055719
(87) Internationale Veröffentlichungsnummer: WO 2019/170808

(56) Entgegenhaltungen:
- EP-A2- 2 805 871
- DE-A1-102008 046 007
- DE-A1-102014 107 914
- DE-B3-102014 013 756
- US-A- 4 660 671

## Beschreibung

Die Erfindung betrifft eine Servolenkbaugruppe für ein autonom gelenktes Fahrzeug mit hybridem Lenksystem, umfassend
- wenigstens ein als hydraulische Lenkunterstützung wirkendes hydraulisches Servoventil mit einem Stellglied zur Steuerung der Lenkunterstützung in Abhängigkeit von einer Relativverdrehung einer Eingangswelle gegenüber einer Ausgangswelle,
- wenigstens eine als Überlagerungslenkung wirkende elektromechanische Lenkunterstützung, wobei die Überlagerungslenkung eine unterstützende Lenkmomentverstärkung als Reaktion auf eine Boost-Kurve bereitstellt,
- ein Steuergerät zur Überwachung und Steuerung des Fahrvorgangs des Fahrzeugs
wobei
- das Steuergerät derart programmiert ist, dass bei Erkennen einer Fehlfunktion während eines autonomen Fahrvorgangs ein Umstellen der Lenkung auf Lenkbremsen durchgeführt wird.

Weiterhin betrifft die vorliegende Erfindung ein Lenkverfahren für ein autonom gelenktes Fahrzeug mit hybridem Lenksystem und eine Servolenkbaugruppe.

Mit geeigneten Unterstützungs- sowie Assistenzsystemen ausgestattete Lenkvorrichtungen von Kraftfahrzeugen sind hinreichend bekannt. Diese reichen von Servolenkungen bis hin zu selbsttätig agierenden Lenksystemen.

Servolenkbaugruppen für derartige hydraulische Servolenkungen von Fahrzeugen umfassen unter anderem Servoventile, die auch als Drehservoventile (Drehschieberventile) bekannt sind. Diese regeln den Hydraulikdruck und damit die Lenkunterstützung in Abhängigkeit vom aufgebrachten Lenkmoment des Fahrers. Es kommen meist Drehservoventile zum Einsatz, bei denen sich eine Eingangswelle, die über eine Lenksäule mit einem Lenkrad verbunden ist, relativ zu einem Ventilteil (auch als Stellglied, Ventilhülse oder Sleeve bezeichnet) verdreht, das mit der Ausgangswelle und bei Zahnstangenlenkungen mit einem Lenkritzel (auch als Pinion bezeichnet) verbunden ist. Bei einer Kugelumlauflenkung (auch LKW Blocklenkung) ist die Steuerhülse mit der Ventilspindel verbunden. Durch ein Torsionssystem zwischen Eingangswelle und Stellglied werden eine drehmomentabhängige Verstellung des Stellglieds des Servoventils und somit eine drehmomentabhängige Ventil- und damit Lenkkraftunterstützungscharakteristik realisiert.

Zur Verwirklichung diverser weiterer Funktionen eines Momentenstellers, insbesondere Spurhalteassistent, Parkpilot, Lenkmomentüberlagerung, autonomes Fahren usw., ist eine vom anliegenden Drehmoment an der Eingangswelle unabhängige Beeinflussung der Lenkkraftunterstützungscharakteristik des Servoventils notwendig und ebenfalls hinlänglich bekannt.

Insbesondere im Nutzfahrzeugbereich sind Hybridlenkungen bekannt, die sowohl eine hydraulische als auch eine elektromechanische Lenkunterstützung aufweisen. Dabei wird die hydraulische Lenkhilfe meist über eine vom Verbrennungsmotor angetriebene Pumpe versorgt. Die elektrische Lenkhilfe wird dagegen üblicherweise von der Lichtmaschine gespeist. In geeigneten Fahrsituationen, in denen nicht oder nur wenig gelenkt wird, also insbesondere während des autonomen Fahrens, erfolgt eine Reduzierung des hydraulischen Systemvolumenstroms durch die aktive Drosselung mittels des ansteuerbaren Volumenstromverstellmechanismus. In diesem Fall wird die verbleibende Lenkkraftunterstützung überwiegend elektromotorisch bereitgestellt. Lediglich in Fahrsituationen, in denen die geforderte Lenkhilfe größer ist als das maximal mögliche elektromotorische Servomoment, erfolgt die Servounterstützung überwiegend durch die hydraulische Lenkunterstützung.

Die beiden Komponenten der Hybridlenkung sind üblicherweise so aufeinander abgestimmt, dass ein möglichst gutes Lenkgefühl erreicht wird. Das gilt sowohl für den Fall, dass die elektrische Überlagerung funktioniert und damit das Lenkgefühl sehr feinfühlig und flexibel beeinflussen kann, als auch für den Fall, dass diese Überlagerung passiv ist und die Lenkung rein mechanisch-hydraulisch funktioniert.

Bei manchen elektromechanischen Überlagerungssystemen wird ausreichend Moment aufgebracht, um zu ermöglichen, dass bei Ausfall der Hydraulik nur die elektrische Überlagerung unterstützt. Somit können in diesem Fall die die Anforderungen der ECE R79 erfüllt werden.

Fahrzeuge, insbesondere Nutzfahrzeuge mit hochautomatisierten Fahrfunktionen die dem Fahrer die Führungsaufgabe und -verantwortung für mindestens eine begrenzte Zeit abnehmen, müssen bei Auftreten eines beliebigen Fehlers die Fahrzeugführung solange möglichst sicher fortsetzen, bis der Fahrer die Verantwortung wieder übernimmt. Die daraus abgeleitete Systemeigenschaft "Fail-Operational" erfordert, dass die Grundfunktionen insbesondere auf der Ausführungsebene weiterhin gewährleistet sind, wenn auch ggf. mit funktionalen Einschränkungen.

Für die Querführung des Fahrzeugs bedeutet das, dass bei einem beliebigen Fehler in der Lenkung das Fahrzeug trotzdem weiterhin in der Spur gehalten werden muss. Dies ist insbesondere dann ausgesprochen schwierig, wenn die elektromechanische Lenkunterstützung von dem Fehler betroffen ist, da im Falle eines hydraulischen Fehlers die elektromechanische Unterstützung zumindest bei geringeren Lenkmomentbedarfen ausreicht.

Druckschrift EP 2 805 871 A2 beschreibt eine ähnliche Servolenkbaugruppe, diese ist aber nicht für ein autonomes Fahrzeug und stellt auch keine zufriedenstellende Hilfe im Falle eines Auftretens eines Fehlers im Lenksystem bereit. Die Druckschrift DE 10 2014 0137 56 B3 beschreibt zwar ein Lenkverfahren für ein autonomes Fahrzeug mit hybridem Lenksystem, allerdings verbleiben bei dem beschriebenen Verfahren kritische Stör- oder gegen Momente bei Fehlfunktion der Lenkeinrichtung.

Die Aufgabe der vorliegenden Erfindung besteht darin, eine Servolenkbaugruppe bereitzustellen, mit der ein autonom gelenktes Fahrzeug auch bei Auftreten eines Fehlers zumindest für einen überschaubaren Zeitraum sicher lenkbar bleibt. Weiterhin besteht die Aufgabe darin, ein Verfahren bereitzustellen, das mit dieser Servolenkbaugruppe durchführbar ist.

Die Aufgabe wird durch eine Servolenkbaugruppe mit den Merkmalen des Anspruchs 1 und ein Lenkverfahren mit den Verfahrensschritten des Anspruchs 10 gelöst.

Die Erfindung basiert auf der Idee das Fahrzeug bei Auftreten eines Fehlers aktiv durch Bremsen zu lenken. Aufgrund des positiven Lenkrollradius bei schweren Nutzfahrzeugen, kann diese Lenkaufgabe durch gezieltes Anbremsen des linken und rechten Vorderrades übernommen werden. Dabei ergibt sich aufgrund der mit dem Lenkrollradius wirkenden Bremskraft ein Lenkmoment, was zum Einschlagen der Räder und damit Drehen des Lenkrades führt. Der Effekt des einseitigen Bremsens auf das Giermoment unterstützt das Verfahren zusätzlich, reicht alleine aber nicht aus.

Der Lenkrollradius (auch Lenkrollhalbmesser) bezeichnet an lenkbaren Achsen von Fahrzeugen den Abstand einer gedachten, verlängerten Linie der Lenkdrehachse zur Mitte der Radaufstandsfläche. Der Lenkrollradius wird durch den Sturz, die Spreizung und die Einpresstiefe des Rades beeinflusst. Trifft die gedachte Linie der Lenkdrehachse genau die Mitte der Radaufstandsfläche, beträgt der Lenkrollradius 0, trifft sie weiter außen auf, wird der Betrag des Lenkrollradius negativ, trifft sie weiter innen auf, ist von einem positiven Lenkrollradius die Rede.

Grundsätzlich ist zwar Lenkbremsen bekannt, beispielsweise bei Kettenfahrzeugen oder landwirtschaftlichen Traktoren, wo der Lenkeffekt ausschließlich über das induzierte Giermoment entsteht, allerdings nicht in Zusammenhang mit einem positiven Lenkrollradius und einer hydraulischen Lenkunterstützung. Problematisch sind dabei nämlich Reibmomente oberhalb des hydraulischen Lenkgetriebes, die bei intakter Hydraulik über das Drehschieberventil und die eingeprägte Boost-Curve ein Gegenmoment am Rad erzeugen und somit die Effizienz des Lenkbremsens deutlich reduzieren. Solche Gegenmomente werden insbesondere bei Hybridlenkungen durch die vorgeschaltete elektrische Momentenüberlagerungslenkung (z.B. Column Drive EPS mit Scheckenantrieb) erzeugt. Dies führt dazu, dass eine Lenkbremse deutlich an Effizienz verliert und als Rückfallebene für die Querführung kaum oder nur sehr begrenzt geeignet ist.

Der grundsätzliche Erfindungsgedanke besteht darin, die Lenkung durch Anpassung der hydraulischen Boost-Kurve derart auszulegen, dass die oberhalb des hydraulischen Drehschieberventils auftretenden Reibmomente keine Auswirkung auf die in den Kammern der Lenkung wirkenden Hydraulikdrücke haben und somit auch kein für das Lenkbremsen negatives Gegenmoment erzeugen.

Die Erfindung ermöglicht die Nutzung der prinzipiell sehr wirksamen Lenkbremse als kostengünstige Redundanz für die Querführung. Es ist somit möglich, Lenkbremsen auch bei Überlagerungslenkungen mit einem höheren Reibmoment zu nutzen.

Die hydraulische Boost-Kurve (Verstärkungskurve) zeigt die Beziehung zwischen dem vom Fahrer aufgebrachten Eingangsmoment überlagert vom elektrischen Unterstützungsmoment (bei Hybridlenkungen) und dem Unterstützungsmoment, das die Hydraulik am Ausgang des Lenkgetriebes erzeugt.

Die Boost-Kurve weist mehrere Merkmale auf, die für eine verbesserte Lenkwahrnehmung des Fahrers sorgen. Es ist beispielsweise gewünscht, bei kleinen Eingangsmomenten für eine geringe Verstärkung der Kurve zu sorgen. Bei einer geringen Verstärkung ist das Unterstützungsmoment dementsprechend gering, wodurch das Lenksystem beim Geradeausfahren für sehr kleine Anpassungen des Eingangsmoments nicht unnötig empfindlich ist. Ein weiteres wünschenswertes Merkmal einer Boost-Kurve besteht darin, dass der Gradient der Kurve bei hohen Werten des Eingangsmoments hoch ist. Dies ist zum Beispiel während Manövern bei niedriger Geschwindigkeit, wie etwa Parkmanövern vorteilhaft.

Die hydraulische Boost-Kurve folgt typischerweise einer kontinuierlichen Kurve, die dem aufgebrachten Eingangsmoment folgt.

In einer besonders vorteilhaften Ausführungsvariante werden die Auswirkungen der erfindungsgemäß veränderten hydraulischen Boost-Kurve zum Ermöglichen des Lenkbremsens im Falle eines Fehlers auf das Lenkgefühl mit der elektrischen Überlagerungslenkung kompensiert. Somit wird das Lenkgefühl beim normalen Fahren nicht verändert.

Die Anpassung der hydraulischen Boost-Kurve erfolgt erfindungsgemäß derart, dass das Servoventil bzw. Drehschieberventil insbesondere in Mittellage unempfindlicher als ansonsten üblich ausgelegt ist.

Gemäß einem bevorzugten Ausführungsbeispiel sind dafür hydraulische Steuerkanten im Servoventil dergestalt ausgeführt, dass bis zu einem bestimmten Reibmoment (z.B. ±3 Nm, vorzugsweise ±2 Nm) kein Differenzdruck in den Kammern entsteht und somit auch kein Gegenmoment erzeugt wird. Dadurch wird ein sogenanntes Totband erzeugt, der Differenzwinkel im Drehschieberventil wird größer.

Alternativ oder zusätzlich kann der Drehstab - der die Charakteristik der Boost-Kurve ebenfalls mitbestimmt - entsprechend angepasst werden. Die Reibmomente bewirken zum Beispiel dann nahezu keine Auslenkung, wenn der Drehstab steifer als ansonsten üblich ausgelegt ist. Auch durch diese Maßnahme kann erreicht werden, dass bis zu einem bestimmten Reibmoment (z.B. ±3 Nm, vorzugsweise ±2 Nm) kein Differenzdruck in den Kammern entsteht.

Beide beschriebenen Möglichkeiten bewirken, dass das Ansprechverhalten der Lenkung träger wird. Insofern ist es von besonderem Vorteil, wenn die Überlagerungslenkung die Auswirkungen der geänderten Boost-Kurve auf das Lenkgefühl im normalen Fahrbetrieb bzw. im Regelbetrieb kompensiert.

Erfindungsgemäß kann die Anpassung der der Funktion der Überlagerungslenkung zugrundeliegenden Boost-Kurve auch durch Außerbetriebnahme der hydraulischen Lenkunterstützung vollständig negiert werden. Mit anderen Worten wird die hydraulische Lenkunterstützung in diesem Fall während der Lenkbremsens umgangen, die Hydraulik wird prinzipiell unwirksam. Dies kann unter anderem auch durch Kurzschließen des hydraulischen Vorlaufs mit dem Rücklauf des Servoventils erreicht werden. Erfindungsgemäß kann hierzu ein internes Druckbegrenzungsventil geöffnet werden, zum Beispiel mittels geeigneter Aktuatorik, einem externen Magnetventil oder auch durch Abschalten der Hydraulikpumpe. Bei einer verbrennungsmotorisch betriebenen Hydraulikpumpe eignet sich hierfür eine entsprechende Kupplung, im Falle einer elektrisch angetriebenen Pumpe (Powerpack) könnte diese aktiv in einen Standby-Modus oder ähnliches gezwungen werden. Erfindungsgemäß kann auch durch Reduzieren des Volumenstroms (EV² oder Powerpack) der Effekt genutzt werden, dass die hydraulische Boost-Kurve dadurch ebenfalls um die Mittenlage im Ansprechverhalten verzögert reagiert. Somit führt auch eine Volumenstromregelung zum gewünschten Ergebnis

Die Erfindung ist nicht auf die beschriebenen Ausführungsbeispiele beschränkt, sondern umfasst auch weitere Varianten, die unter den Wortlaut der angehängten Ansprüche fallen.

## Patentansprüche

1. Servolenkbaugruppe für ein autonom gelenktes Fahrzeug mit hybridem Lenksystem, umfassend
- wenigstens ein als hydraulische Lenkunterstützung wirkendes hydraulisches Servoventil mit einem Stellglied zur Steuerung der Lenkunterstützung in Abhängigkeit von einer Relativverdrehung einer Eingangswelle gegenüber einer Ausgangswelle,
- wenigstens eine als Überlagerungslenkung wirkende elektromechanische Lenkunterstützung, wobei die Überlagerungslenkung eine unterstützende Lenkmomentverstärkung als Reaktion auf eine Boost-Kurve bereitstellt,
- ein Steuergerät zur Überwachung und Steuerung des Fahrvorgangs des Fahrzeugs,
wobei
- das Steuergerät derart programmiert ist, dass bei Erkennen einer Fehlfunktion während eines autonomen Fahrvorgangs ein Umstellen der Lenkung auf Lenkbremsen durchgeführt wird,
**dadurch gekennzeichnet, dass** die Servolenkbaugruppe derart abgestimmt ist, dass oberhalb des hydraulischen Servoventils auftretende Reibmomente keine Auswirkung auf die in Kammern der hydraulischen Lenkunterstützung wirkenden Hydraulikdrücke haben und somit dem Lenkbremsen kein Gegenmoment entgegensetzen.

2. Servolenkbaugruppe nach Anspruch 1, **dadurch gekennzeichnet, dass** die der Funktion der Überlagerungslenkung zugrundeliegende hydraulische Boost-Kurve die auftretenden Reibmomente derart berücksichtigt, dass diese keine Auswirkung auf die in Kammern der hydraulischen Lenkunterstützung wirkenden Hydraulikdrücke haben.

3. Servolenkbaugruppe nach Anspruch 2, **dadurch gekennzeichnet, dass** die Anpassung der hydraulischen Boost-Kurve durch entsprechende Ausformung hydraulischer Steuerkanten in einem als Drehschieberventil ausgeführten Servoventil erfolgt.

4. Servolenkbaugruppe nach Anspruch 3, **dadurch gekennzeichnet, dass** die Anpassung der hydraulischen Boost-Kurve durch Auswahl der entsprechenden Steifigkeit eines Torsionstabes in einem als Drehschieberventil ausgeführten Servoventil erfolgt.

5. Servolenkbaugruppe nach einem der Ansprüche 1 bis 4, **dadurch gekennzeichnet, dass** bis zu einem Reibmoment von minus 3 Nm bis plus 3 Nm, vorzugsweise von minus 2 Nm bis plus 2 Nm kein Differenzdruck in den Kammern der hydraulischen Lenkunterstützung entsteht.

6. Servolenkbaugruppe nach einem der Ansprüche 1 bis 5, **dadurch gekennzeichnet, dass** die Überlagerungslenkung derart ausgeführt und das Steuergerät derart programmiert ist, dass die Auswirkung der an die auftretenden Reibmomente angepassten hydraulischen Boost-Kurve auf das Lenkgefühl im Regelbetrieb kompensiert ist.

7. Servolenkbaugruppe nach Anspruch 1, **dadurch gekennzeichnet, dass** die der Funktion der Überlagerungslenkung zugrundeliegende Boost-Kurve durch Außerbetriebnahme der hydraulischen Lenkunterstützung negiert wird.

8. Servolenkbaugruppe nach Anspruch 7, **dadurch gekennzeichnet, dass** die Außerbetriebnahme der hydraulischen Lenkunterstützung durch Kurzschließen des hydraulischen Vorlaufs mit dem hydraulischen Rücklauf erfolgt.

9. Servolenkbaugruppe nach Anspruch 8, **dadurch gekennzeichnet, dass** das Kurzschließen des hydraulischen Vorlaufs durch Öffnen eines internen Druckbegrenzungsventiles mittels geeigneter Aktuatorik, durch Betätigen eines externen Magnetventils, oder durch Abschalten einer Hydraulikpumpe mittels Kupplung erfolgt.

10. Lenkverfahren für ein autonom gelenktes Fahrzeug mit hybridem Lenksystem und einer Servolenkbaugruppe nach den Ansprüchen 1 bis 9,
mit den Verfahrensschritten,
- Erkennen einer Fehlfunktion während eines autonomen Fahrvorgangs,
- Umstellen der Lenkung durch das Steuergerät auf Lenkbremsen, bei der das Lenken durch Anbremsen zumindest eines Rades erfolgt, so dass sich aufgrund der mit dem Lenkrollradius wirkenden Bremskraft ein Lenkmoment ergibt, welches zum Einschlagen der Räder führt.

11. Lenkverfahren nach Anspruch 10, **dadurch gekennzeichnet, dass** das Lenkbremsen durch Anbremsen des linken und/oder rechten Vorderrades des Fahrzeugs bewirkt wird.

12. Lenkverfahren nach Anspruch 10 oder Anspruch 11, **dadurch gekennzeichnet, dass** gleichzeitig die hydraulische Lenkunterstützung außer Betrieb genommen wird.

13. Lenkverfahren nach Anspruch 12, **dadurch gekennzeichnet, dass** die Außerbetriebnahme der hydraulischen Lenkunterstützung durch Kurzschließen des hydraulischen Vorlaufs mit dem hydraulischen Rücklauf erfolgt.

14. Lenkverfahren nach einem der Ansprüche 10 bis 12, **dadurch gekennzeichnet, dass** eine Anpassung der der Funktion der Überlagerungslenkung zugrundeliegenden Boost-Kurve durch eine Volumenstromregelung, insbesondere durch eine Absenkung des Volumenstroms erfolgt.

## Claims

1. Servo-assisted steering assembly for an autonomously steered vehicle having a hybrid steering system, comprising
- at least one hydraulic servo valve that functions as a hydraulic steering assistance system and comprises an actuator for controlling the steering assistance system in dependence upon a relative rotation of an input shaft with respect to an output shaft,
- at least one electromechanical steering assistance system that functions as a superimposed steering system, wherein the superimposed steering system boosts the supporting steering torque in response to a boost curve,
- a control unit for monitoring and controlling the driving procedure of the vehicle,
wherein
- the control unit is programmed in such a manner that upon recognising a malfunction during an autonomous driving procedure the steering is switched to steering braking,
**characterised in that** the servo-assisted steering assembly is coordinated in such a manner that frictional torques that occur above the hydraulic servo valve do not have any influence on the hydraulic pressures that are acting in the chambers of the hydraulic steering assistance and consequently do not subject the steering braking to a counter torque.

2. Servo-assisted steering assembly according to claim 1, **characterised in that** the hydraulic boost curve that forms the basis of the function of the superimposed steering system takes into consideration the occurring frictional torques in such a manner that they do not have any effect on the hydraulic pressures that are acting in the chambers of the hydraulic steering assistance system.

3. Servo-assisted steering assembly according to claim 2, **characterised in that** the hydraulic boost curve is adjusted by virtue of correspondingly shaping hydraulic control edges in a servo valve that is embodied as a rotary slide valve.

4. Servo-assisted steering assembly according to claim 3, **characterised in that** the hydraulic boost curve is adjusted by virtue of selecting the corresponding rigidity in a torsion bar of a servo valve that is embodied as a rotary slide valve.

5. Servo-assisted steering assembly according to any of claims 1 to 4, **characterised in that** up to a frictional torque from minus 3 Nm to plus 3 Nm, preferably from minus 2 Nm to plus 2 Nm there is no pressure difference in the chambers of the hydraulic steering assistance system.

6. Servo-assisted steering assembly according to any of claims 1 to 4, **characterised in that** the superimposed steering system is embodied in such a manner and the control unit is programmed in such a manner that the effect of the hydraulic boost curve on the steering sensation is compensated in the control mode, said hydraulic boost curve being adjusted to the occurring frictional torques.

7. Servo-assisted steering assembly according to claim 1, **characterised in that** the boost curve that forms the basis of the function of the superimposed steering system is negated by virtue of closing down the hydraulic steering assistance.

8. Servo-assisted steering assembly according to claim 8, **characterised in that** the hydraulic steering assistance system is closed down by virtue of short-circuiting the hydraulic forward flow by means of the hydraulic return flow.

9. Servo-assisted steering assembly according to claim 7, **characterised in that** the hydraulic forward flow is short-circuited by virtue of opening an internal pressure limiting valve by means of a suitable actuator system, by virtue actuating an external solenoid valve or by virtue of switching off a hydraulic pump by means of a coupling.

10. Steering method for an autonomously steered vehicle having a hybrid steering system and a hydraulic steering assistance system according to claims 1 to 9, said steering method having the procedural steps,
- identifying a malfunction during an autonomous driving procedure,
- switching the steering by means of the control unit to a steering braking, in which the vehicle is steered by virtue of braking at least one wheel with the result that, due to the braking force that is acting on the scrub radius, a steering torque is produced that causes the wheels to turn.

11. Steering method according to claim 10, **characterised in that** the steering braking is realised by virtue of braking the left-hand and/or right-hand front wheel of the vehicle.

12. Steering method according to claim 10 or claim 11, **characterised in that** simultaneously the hydraulic steering assistance system is closed down.

13. Steering method according to claim 12, **characterised in that** hydraulic steering assistance system is closed down by virtue of short-circuiting the hydraulic forward flow by means of the hydraulic return flow.

14. Steering method according to any of claims 10 to 12, **characterised in that** the boost curve that forms the basis of the function of the superimposed steering system is adjusted by means of a volumetric flow rate control procedure, in particular by virtue of reducing the volumetric flow rate.

## Revendications

1. Module de servodirection d'un véhicule à direction autonome ayant un système de direction hybride, comprenant
- au moins une servovalve hydraulique agissant en assistance de direction hydraulique et comprenant un actionneur de commande de l'assistance de direction en fonction d'une rotation relative d'un arbre d'entrée par rapport à un arbre de sortie,
- au moins une assistance de direction électromécanique agissant en direction de superposition, dans lequel la direction de superposition donne une amplification du couple de direction assistée en réaction à une courbe boost,
- un appareil de commande pour le contrôle et la commande de la marche du véhicule,
dans lequel
- l'appareil de commande est programmé de manière à effectuer, s'il détecte une fonction défectueuse pendant une marche autonome, un passage de la direction à de freins de direction,
**caractérisé en ce que** le module de servodirection est accordé, de manière à ce que hydraulique, l'apparition de couples de frottement au-dessus de la servovalve n'a pas d'effet sur les pressions hydrauliques régnant dans les chambres de l'assistance de direction hydraulique et n'opposent ainsi pas de couple antagoniste au frein de direction.

2. Module de servodirection suivant la revendication 1, **caractérisé en ce que** la courbe boost hydraulique à la base de la fonction de la direction de superposition prend en compte l'apparition de couples de frottement, de manière à ce que ceux-ci n'aient pas d'effet sur les pressions hydrauliques régnant dans les chambres de l'assistance de direction hydraulique.

3. Module de servodirection suivant la revendication 2, **caractérisé en ce que** l'adaptation de la courbe boost hydraulique s'effectue par déformation correspondante de bord de commande hydraulique dans une servovalve réalisée sous la forme d'une valve à tiroir rotatif.

4. Module de servodirection suivant la revendication 3, **caractérisé en ce que** l'adaptation de la courbe boost hydraulique s'effectue en choisissant la raideur adéquate d'une barre de torsion dans une servovalve réalisée en valve à tiroir rotatif.

5. Module de servodirection suivant l'une des revendications 1 à 4, **caractérisé en ce que**, jusqu'à un couple de frottement allant de moins 3 Nm à plus 3 Nm, de préférence de moins 2 Nm à plus 2 Nm, il ne se crée pas de différence de pression dans les chambres de l'assistance de direction hydraulique.

6. Module de servodirection suivant l'une des revendications 1 à 5, **caractérisé en ce que** la direction de superposition est réalisée et l'appareil de commande est programmé, de manière à compenser, en fonctionnement réglé, l'effet de la courbe boost hydraulique, adaptée à l'apparition de couples de frottement, sur la sensibilité au braquage.

7. Module de servodirection suivant la revendication 1, **caractérisé en ce que** la courbe boost à la base de la fonction de direction de superposition est négligée par la mise hors service de l'assistance de direction hydraulique.

8. Module de servodirection suivant la revendication 7, **caractérisé en ce que** la mise hors service de l'assistance de direction hydraulique s'effectue en court-circuitant l'avance hydraulique par le retour hydraulique.

9. Module de servodirection suivant la revendication 8, **caractérisé en ce que** le court-circuitage de l'avance hydraulique s'effectue par ouverture d'une valve d limitation de la pression au moyen d'un système d'actionnement approprié, par actionnement d'une électrovanne extérieure ou par mise à l'arrêt d'une pompe hydraulique au moyen d'un accouplement.

10. Procédé de direction d'un véhicule à direction autonome ayant un système de direction hybride et un module de servodirection suivant les revendications 1 à 9, comprenant les stades de procédé
- détection d'une fonction de défaut pendant une marche autonome,
- passage de la direction par l'appareil de commande à des freins de direction, dans lequel la direction s'effectue par freinage d'au moins une roue, de manière à ce que, sur la base de la force de freinage agissant sur le rayon de pivotement du chemin de roulement, se produise un couple de direction, qui entraîne le braquage des roues.

11. Procédé de direction suivant la revendication 10, **caractérisé en ce que** l'on provoque le freinage de direction par freinage de la roue avant gauche et/ou droite du véhicule.

12. Procédé de direction suivant la revendication 10 ou la revendication 11, **caractérisé en ce que** l'on met en même temps hors de fonctionnement l'assistance de direction hydraulique.

13. Procédé de direction suivant la revendication 12, **caractérisé en ce que** la mise hors de fonctionnement de l'assistance de direction hydraulique s'effectue en court-circuitant l'avance hydraulique par le retour hydraulique.

14. Procédé de direction suivant l'une des revendications 10 à 12, **caractérisé en ce que** l'on effectue une adaptation de la courbe boost à la base de la fonction de la direction de superposition, par une régulation du courant en volume, en particulier par une diminution du courant en volume.
